# EUROPEAN PATENT APPLICATION

(11) **EP 3 730 888 A1**
(43) Date of publication of application: **28.10.2020**
(21) Application number: 18892966.5
(22) Date of filing: 11.12.2018
(51) Int. Cl.: F28D 1/03, F28D 9/00, F28F 9/02, F28F 19/00, F24H 8/00, F28F 9/22, F28D 21/00

(54) **HEAT EXCHANGER**

(30) Priority: 20.12.2017 KR 20170175645
(71) Applicant: Kyungdong Navien Co., Ltd., Pyeongtaek-si, Gyeonggi-do 17704 (KR)
(72) Inventor: JEONG, In Chul, Seoul 08501 (KR); PARK, Jun Gil, Seoul 08501 (KR)
(74) Representative: Habermann, Hruschka & Schnabel
(86) International application number: PCT/KR2018/015660
(87) International publication number: WO 2019/124847

(57) **Abstract**

The purpose of the present invention is to provide a heat exchanger capable of suppressing boiling and lime precipitation due to local overheating of a heating medium and at the same time improving heat transmittance efficiency. The heat exchanger of the present invention for achieving said purpose comprises: heating medium flow paths, through which a heating medium flows, inside a plurality of laminated plates; and a heat exchange unit in which combustion gas flow paths, through which a combustion gas flows, are alternately formed to be adjacent to each other, wherein the heat exchange units have a heating medium differential distribution unit which enables the flow rate of the heating medium to be differentially distributed to parallel heating medium flow paths of the heat exchange unit such that the flow rate of the heating medium passing through the parallel heating medium flow paths is balanced with the quantity of absorbed heat transmitted to the plates.

## Description

### [Technical Field]

The present invention relates to a heat exchanger, and more specifically, to a heat exchanger which allows boiling of a heating medium and lime precipitation from the heating medium to be suppressed and also allows heat transmittance efficiency to be improved by distributing the heating medium at different flow rates such that the flow rates of the heating medium passing through heating medium flow paths formed as a plurality of layers between a plurality of plates are balanced with amounts of absorbed heat.

### [Background Art]

Boilers for heating or for hot water are apparatuses configured to heat heating water or direct water (hereinafter, referred to as a "heating medium") using heat sources so as to heat desired places or supply hot water to the places, and include burners configured to burn mixtures of gas and air and heat exchangers configured to transmit combustion heat of combustion gas to the heating medium.

As an example of a conventional heat exchanger according to the related art, the heat exchanger including a burner positioned at a center of the heat exchanger and a heat exchanger pipe wound around the burner in a coil shape is disclosed in Korean Registered Patent No. 10-0813807.

The heat exchanger according to the related art has problems in that, since a tube is molded to have a flat shape, the tube is deformed to a round shape in a case in which a pressure is applied to a heat transmission medium unit and, since the tube is manufactured to be rolled upward, the tube is thick.

In addition, since the conventional heat exchanger has a structure in which the heat exchanger pipe is wound around a combustion chamber in the coil shape, heat exchange between combustion gas and a heating medium is performed only at a local space adjacent to the heat exchanger, and thus there is a disadvantage in that a wide heat transmission area cannot be secured.

As a solution for such problems, a plate type heat exchanger has been recently developed in which a plurality of plates are stacked and a heating medium flow path and a combustion gas flow path are formed between the plurality of plates so that heat exchange is performed between a heating medium and combustion gas.

The plate type heat exchanger according to the related art is disclosed in Japanese Patent Publication No. 2006-214628. In the case of a plate type heat exchanger disclosed in a document of the related art, a flow direction of a heating medium is changed from a horizontal direction to a vertical direction in a process in which the heating medium is distributed to heating medium flow paths formed as a plurality of layers, and flow rates of the heating medium distributed to the layers of the heating medium flow paths may be nonuniform due to inertia and pressure of the heating medium.

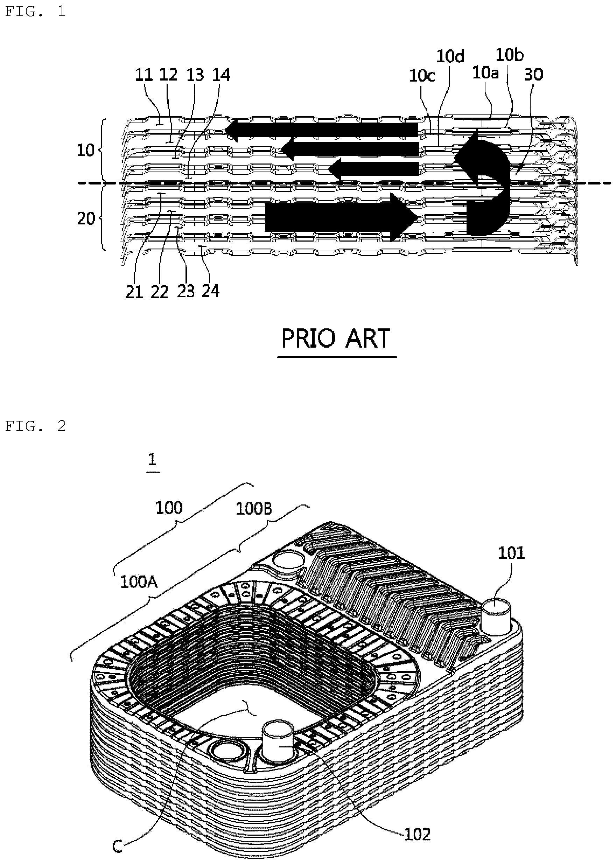

Referring to FIG. 1 to describe the above-described problems, in a plate type heat exchanger formed of a plurality of stacked plates, a heating medium passes through a plurality of heating medium flow paths 21, 22, 23, and 24 formed in a lower heat exchange unit 20 and flows in one direction, the flow direction of the heating medium is changed in a direction opposite to the one direction, and the heating medium passes through a plurality of heating medium flow paths 11, 12, 13, and 14 formed in an upper heat exchange unit 10 and is discharged through a heating medium outlet pipe (not shown). The heating medium passing through a flow path conversion unit 30 in which the flow direction of the heating medium is changed is supplied at a relatively higher flow rate to the outer heating medium flow path 11 positioned at an upper side due to inertia, and the heating medium is supplied at relatively lower flow rates to the remaining heating medium flow paths 12, 13, and 14 positioned at a lower side.

An outer plate 10a positioned at an uppermost end forming the outer heating medium flow path 11 is in contact with external air, and heat of combustion gas is transmitted only through an inner plate 10b positioned below the outer plate 10a. Accordingly, since the heating medium is supplied at the high flow rate to the heating medium flow path 11 formed due to the outer plate 10a even though the heating medium flow path 11 absorbs little heat, and heat of the combustion gas is transmitted to the heating medium flow paths 12, 13, and 14 formed due to inner plates 10c and 10d through all of the two plates 10c and 10d so that the heating medium is supplied at the lower flow rates to heating medium flow paths 12, 13, and 14 even though the heating medium flow paths 12, 13, and 14 absorb a great deal of heat, the flow rates of the heating medium are unbalanced with amounts of the absorbed heat.

In a case in which the flow rates of the heating medium in the heating medium flow paths of layers are not balanced with the amounts of absorbed heat transmitted to the heating medium through plates, since heat exchange performance between the heating medium and the combustion gas is degraded and, since the heating medium boils in a region in which the flow rate of the heating medium is low due to local overheating, there are problems in that noise is generated and a foreign material such as lime is precipitated.

### [Disclosure]

### [Technical Problem]

The present invention is directed to providing a heat exchanger which allows boiling of a heating medium and lime precipitation from the heating medium due to local overheating of the heating medium to be suppressed and also allows heat transmittance efficiency to be improved.

### [Technical Solution]

One aspect of the present invention provides a heat exchanger including a heat exchange unit in which heating medium flow paths and combustion gas flow paths are alternately formed adjacent to each other in a plurality of stacked plates, wherein a heating medium flows through the heating medium flow paths, combustion gas flows through the combustion gas flow paths, and the heat exchange unit includes a heating medium differential distribution unit configured to distribute the heating medium at different flow rates to the heating medium flow paths formed in parallel such that the flow rates of the heating medium passing through the heating medium flow paths, which are formed in parallel, of the heat exchange unit are balanced with amounts of absorbed heat transmitted to the plates.

The heating medium differential distribution unit may distribute the heating medium at the different flow rates such that a flow rate of the heating medium passing through the heating medium flow path formed due to an outer plate forming an outer wall of the heat exchange unit among the plurality of plates is less than the flow rate of the heating medium passing through the heating medium flow path formed due to the plate positioned inside the heat exchange unit.

The heating medium differential distribution unit may be formed to have a structure in which a heating medium outlet pipe provided at a heating medium outlet side of the heat exchange unit extends toward one side of the heating medium flow paths formed in parallel positioned at the heating medium outlet side.

A lower end portion of the heating medium outlet pipe may be spaced a predetermined gap from a discharge port of the heating medium flow path formed due to the outer plate and extend to be positioned at one side of the discharge port of the heating medium flow path.

An extension pipe portion may be formed on the heating medium outlet pipe to be spaced the predetermined gap from the discharge port of the heating medium flow path formed due to the outer plate and positioned at the one side of the discharge port of the heating medium flow path.

A sensible heat exchange unit configured to heat the heating medium using sensible heat of the combustion gas generated by combustion of a burner and a latent heat exchange unit configured to heat the heating medium using latent heat of the combustion gas passing through the sensible heat exchange unit may be integrally formed in the plurality of stacked plates.

The heating medium differential distribution unit may be disposed at a position, which is the same as that of a heating medium outlet pipe provided at a heating medium outlet side of the sensible heat exchange unit, and provided at one side of the sensible heat exchange unit.

The heating medium flow paths of the latent heat exchange unit may be formed in parallel.

A connecting path of the heating medium may be formed between the sensible heat exchange unit and the latent heat exchange unit, and the heating medium flow paths of the latent heat exchange unit may be connected in parallel between a heating medium inlet through which the heating medium is introduced and the connecting path of the heating medium.

The heat exchange unit may surround an outer side of a combustion chamber and be provided to have a stacked structure of a plurality of heat exchange units, and heating medium flow directions may be different from each other in the sensible heat exchange unit formed at one side of the plurality of heat exchange units.

The heat exchange unit may include at least two unit heat exchange units, and the unit heat exchange units may be formed such that the heating medium flows in two directions or directions opposite to each other.

The heating medium may flow in two directions through a first heat exchange unit positioned at a lower portion of the sensible heat exchange unit, the heating medium may flow in one direction through a second heat exchange unit positioned at an intermediate portion of the sensible heat exchange unit, and the heating medium may flow in a direction opposite to the one direction through a third heat exchange unit positioned at an upper portion of the sensible heat exchange unit.

The heat exchange unit may surround an outer side of a combustion chamber and be provided to have a stacked structure of a plurality of heat exchange units, the heating medium flow paths may be connected in series between the plurality of heat exchange units, and the heating medium flow paths may be formed in parallel in each of the heat exchange units.

A through hole through which the heating medium is introduced and another through hole through which the heating medium is discharged may be formed to be adjacent and spaced apart from each other in one side portion of each of the plurality of heat exchange units, and the through hole through which the heating medium is introduced may be blocked from the another through hole through which the heating medium is discharged, wherein the through hole and the another through hoke may be positioned adjacent to each other in the heat exchange unit, and the through hole through which the heating medium is introduced and the another through hole through which the heating medium is discharged, which are formed in any one heat exchange unit among the heat exchange units which are stacked adjacent to each other, may be formed at positions which are opposite to each other and at which the through hole through which the heating medium is introduced and the another through hole through which the heating medium is discharged, which are formed in the remining one heat exchange unit.

A through hole at one side, another through hole at the other side, a blocking portion, and another blocking portion may be formed in one upper side portion of the heat exchange unit, wherein the through hole at the one side and the other through hole at the another side may provide a connecting path of a heating medium such that the heating medium flows in one direction between the heat exchange units which are stacked adjacent to each other, the blocking portion may guide the heating medium introduced into the heating medium flow path through the through hole at the one side to flow around the combustion chamber in one direction and to flow toward the another through hole at the other side, and the blocking portion may guide the heating medium introduced into the heating medium flow path through the another through hole at the other side to flow around the combustion chamber in a direction opposite to the one direction and to flow toward the through hole at the one side.

### [Advantageous Effects]

According to a heat exchanger according to the present invention, since a heating medium differential distribution unit is provided to distribute a heating medium at different flow rates such that the flow rates of the heating medium passing through heating medium flow paths formed as a plurality of layers between a plurality of plates are balanced with amounts of absorbed heat transmitted to the plates, boiling of the heating medium and lime precipitation from the heating medium due to local overheating can be suppressed and heat transmittance efficiency can also be improved.

In addition, since the heating medium differential distribution unit is formed in which a lower end portion of a heating medium outlet pipe extends inward of a heat exchange unit such that the heating medium outlet pipe is positioned at one side of the heating medium flow path positioned at an outer side of the heat exchange unit, a structure of the heat exchanger in which the heating medium differential distribution unit is formed can be simplified.

In addition, since an extension pipe portion is additionally formed on an extending portion of the heating medium outlet pipe as necessary, even in a case in which a diameter of the heating medium outlet pipe spaced a predetermined gap from the heating medium flow path positioned at the outer side is not sufficient to block one side of the heating medium flow path, the extension pipe portion can be spaced the predetermined gap from the heating medium flow path positioned at the outer side and can block the one side of the heating medium flow path, and thus the heating medium can be effectively distributed at different flow rates.

In addition, since a plurality of heat exchange units which surround a combustion chamber and are stacked are provided, and the heating medium flow paths are formed in series between the plurality of heat exchange units and the heating medium flow paths are formed in parallel in each of the heat exchange units, when a capacity of the heat exchanger is increased, the capacity can be increased without reducing a pressure of the heating medium by adjusting the number of parallel flow paths.

In addition, since the plurality of plates are stacked to integrally form a sensible heat exchange unit and a latent heat exchange unit, the number of components of the heat exchanger can be decreased, and a production process is simplified, and thus an automatic production process is possible.

### [Description of Drawings]

FIG. 1 is a view for describing an imbalance problem between a flow rate of a heating medium and an amount of absorbed heat in a conventional heat exchanger.
FIG. 2 is a perspective view illustrating a heat exchanger according to one embodiment of the present invention.
FIG. 3 is a plan view illustrating the heat exchanger according to one embodiment of the present invention.
FIG. 4 is a perspective view illustrating a part of a plate forming the heat exchanger according to one embodiment of the present invention.
FIG. 5 is a perspective view illustrating a flow path of a heating medium.
FIG. 6 is a cross-sectional view taken along line A-A of FIG. 3.
FIG. 7 is a cross-sectional view taken along line B-B of FIG. 3.
FIG. 8 is a cross-sectional view taken along line C-C of FIG. 3.
FIG. 9 is a cross-sectional view taken along line D-D of FIG. 3.
FIG. 10 is a cross-sectional view illustrating a heating medium outlet pipe of a heat exchanger according to another embodiment of the present invention.

### [Reference Numerals]

10: UPPER HEAT EXCHANGE UNIT
10a: OUTER PLATE
10b, 10c, 10d: INNER PLATE
11, 12, 13, 14: HEATING MEDIUM FLOW PATH OF UPPER HEAT EXCHANGE UNIT
20: LOWER HEAT EXCHANGE UNIT
21, 22, 23, 24: HEATING MEDIUM FLOW PATH OF LOWER HEAT EXCHANGE UNIT
30: FLOW PATH CONVERSION UNIT
1: HEAT EXCHANGER
100: HEAT EXCHANGE UNIT
100A: SENSIBLE HEAT EXCHANGE UNIT
100B: LATENT HEAT EXCHANGE UNIT
100-A: FIRST HEAT EXCHANGE UNIT
100-B: SECOND HEAT EXCHANGE UNIT
100-C: THIRD HEAT EXCHANGE UNIT
100-1, 100-2: UNIT PLATE
100a-1, 100a-2: FIRST PLATE
100b-1, 100b-2: SECOND PLATE
101: HEATING MEDIUM INLET PIPE
102: HEATING MEDIUM OUTLET PIPE (HEATING MEDIUM DIFFERENTIAL DISTRIBUTION UNIT)
102a: LOWER END PORTION OF HEATING MEDIUM OUTLET PIPE
102b: FIXING UNIT OF HEATING MEDIUM OUTLET PIPE
102c: EXTENSION PIPE PORTION OF HEATING MEDIUM OUTLET PIPE
110: FIRST PLANAR PORTION
120: FIRST PROTRUSION
130: SECOND PROTRUSION
140: FIRST FLANGE
150: SECOND PLANAR PORTION
160: FIRST RECESSED PORTION
170: SECOND RECESSED PORTION
180: SECOND PLANAR PORTION
A1: FIRST OPEN PORT
A2: SECOND OPEN PORT
C: COMBUSTION CHAMBER
D: COMBUSTION GAS DISCHARGE PORT
H1 TO H8: THROUGH HOLE
H2', H3', H4', H7', H8': BLOCKING PORTION
P1: HEATING MEDIUM FLOW PATH
P1-1, P1-2, P1-3, P1-4: HEATING MEDIUM FLOW PATH OF FIRST HEAT EXCHANGE UNIT
P1-5, P1-6, P1-7, P1-8: HEATING MEDIUM FLOW PATH OF SECOND HEAT EXCHANGE UNIT
P1-9, P1-10, P1-11, P1-12: HEATING MEDIUM FLOW PATH OF THIRD HEAT EXCHANGE UNIT
P2: COMBUSTION GAS FLOW PATH

### [Modes of the Invention]

Hereinafter, configurations and operations related to exemplary embodiments of the present invention will be described below in detail with reference to the accompanying drawings.

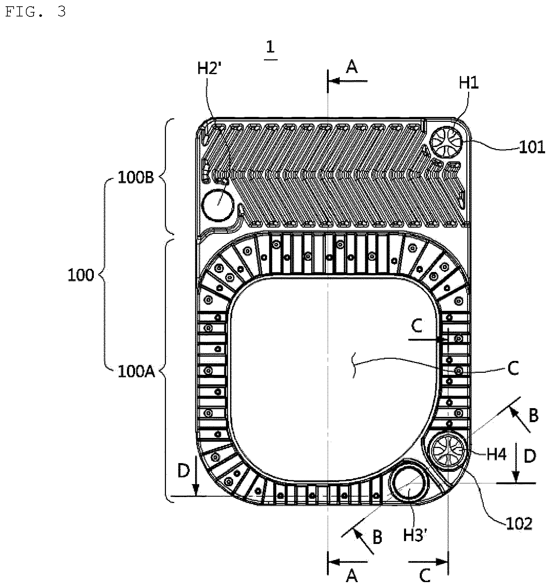

Referring to FIGS. 2 to 7, a heat exchanger 1 according to one embodiment of the present invention includes a heat exchange unit 100 formed of a plurality of plates stacked around a combustion chamber C in which combustion heat and combustion gas are generated due to combustion of the burner (not shown).

The heat exchange unit 100 includes a sensible heat exchange unit 100A surrounding an outer side of the combustion chamber C and including one side regions of the plates to heat a heating medium using sensible heat of the combustion gas generated by combustion of the burner and a latent heat exchange unit 100B including the other side regions of the plates to heat the heating medium using latent heat generated while water vapor included in the combustion gas, of which heat is exchanged in the sensible heat exchange unit 100A, is condensed.

The sensible heat exchange unit 100A and the latent heat exchange unit 100B are formed to have an integral structure using the plurality of stacked plates.

A heating medium inlet pipe 101 is provide at one side of an upper portion of the latent heat exchange unit 100B, and a heating medium outlet pipe 102 is provided at one side of an upper portion of the sensible heat exchange unit 100A. The heating medium outlet pipe 102 serves as a heating medium differential distribution unit which will be described below.

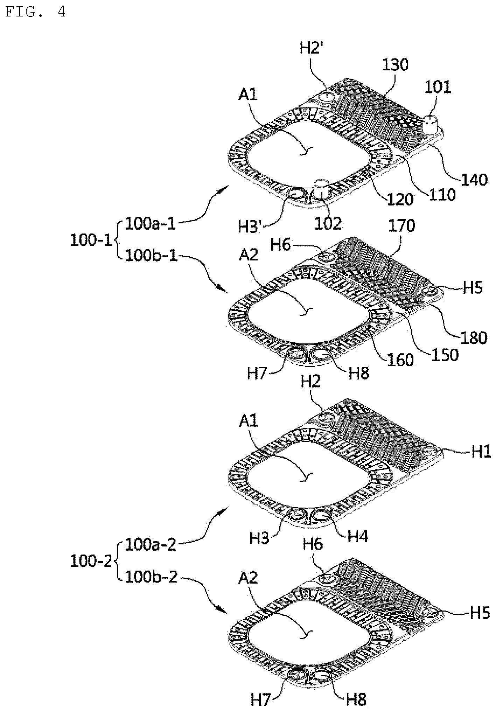

As one embodiment, the plurality of plates may include twelve unit plates, but FIG. 4 shows only two unit plates 100-1 and 100-2 positioned at the top. The unit plate 100-1 includes a first plate 100a-1 positioned at the top and a second plate 100b-1 stacked below the first plate 100a-1, and the unit plate 100-2 includes a first plate 100a-2 positioned at the top and a second plate 100b-2 stacked below the first plate 100a-2.

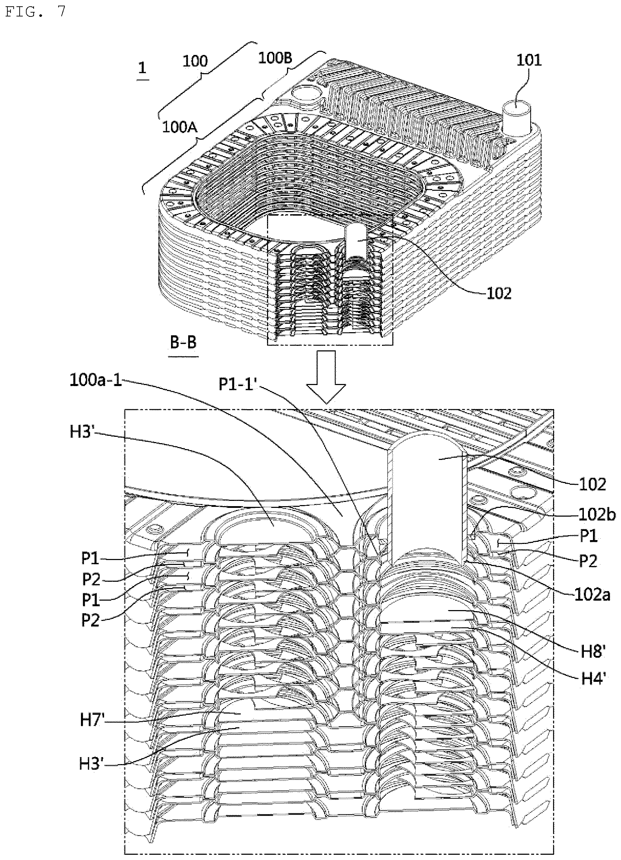

Referring to FIGS. 4 and 7 together, heating medium flow paths P1 through which the heating medium flows are formed between the first plates 100a-1 and 100a-2 and the second plates 100b-1 and 100b-2 forming the unit plates 100-1 and 100-2. That is, the heating medium flow path P1 is formed between the first plate 100a-1 and the second plate 100b-1 forming the unit plate 100-1, and the heating medium flow path P1 is formed between the first plate 100a-2 and the second plate 100b-2 forming the unit plate 100-2.

In addition, combustion gas flow paths P2 through which the combustion gas flows are formed between the second plate 100b-1 forming the unit plate 100-1 positioned at one side of the unit plates 100-1 and 100-2 which are stacked to each other and the unit plate 100-2 forming the first plate 100a-2 positioned at the other side thereof.

The heating medium flow path P1 and the combustion gas flow path P2 are alternately formed adjacent to each other so that heat exchange is performed between the heating medium and the combustion gas. The heating medium flow path P1 and the combustion gas flow path P2 are formed adjacent to each other but spatially spaced apart from each other so that the heating medium flows through the heating medium flow path P1 and the combustion gas flows through the combustion gas flow path P2.

Referring to FIG. 4, the first plate includes a first planar portion 110, a first protrusion 120 protruding upward from one side of the first planar portion 110 and including a central portion in which a first open port A1 is formed to form the sensible heat exchange unit 100A, a second protrusion 130 protruding upward from the other side of the first planar portion 110 to form the latent heat exchange unit 100B and a first flange 140 bent downward from an edge of the first plate.

The second plate includes a second planar portion 150, a first recessed portion 160 recessed downward from one side of the second planar portion 150 to form the heating medium flow path P1 between the first protrusion 120 and the first recessed portion 160 and including a central portion in which a second open port A2 corresponding to the first open port A1 is formed, a second recessed portion 170 recessed downward from the other side of the second planar portion 150 to form the heating medium flow path P1 between the second protrusion 130 and the second recessed portion 170, and a second flange 180 bent downward from an edge of the second plate.

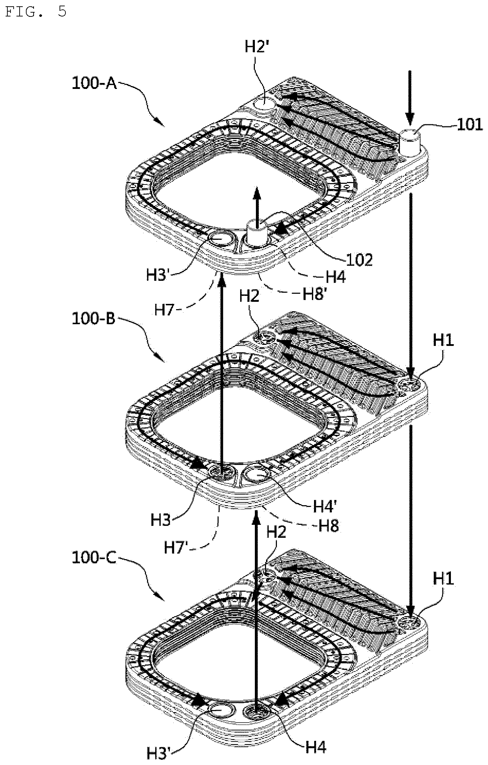

Referring to FIG. 5, the heat exchange unit 100 is formed to have a stacked structure of a plurality of heat exchange units and includes at least two unit heat exchange units 100-A, 100-B, and 100-C, and the unit heat exchange units 100-A, 100-B, and 100-C are formed such that the heating medium flows in two directions or directions opposite to each other. As one embodiment, the plurality of unit heat exchange units 100-A, 100-B, and 100-C may include a first heat exchange unit 100-A, a second heat exchange unit 100-B, and a third heat exchange unit 100-C. The first heat exchange unit 100-A may include a stacked structure of four unit plates positioned at an upper portion thereof, the second heat exchange unit 100-B may include a stacked structure of four unit plates positioned an intermediate portion thereof, and the third heat exchange unit 100-C may include a stacked structure of four unit plates positioned at a lower portion thereof.

Arrows in FIG. 5 show flow directions of the heating medium.

Referring to FIGS. 4 and 5 together, the heating medium inlet pipe 101 is provided at one side of the latent heat exchange unit 100B, and through holes H1 and H5, through which the heating medium introduced into the heating medium inlet pipe 101 flows to the heating medium flow path P1 formed between the unit plates, are formed at a lower side of the heating medium inlet pipe 101. Through holes H2 and H6 are formed at the other side of the latent heat exchange unit 100B so that the heating medium passing through the heating medium flow path P1 flows to the third heat exchange unit 100-C of the sensible heat exchange unit 100A. A blocking portion H2' is formed at the other side of the first plate 100a-1 positioned at an uppermost end thereof at a position corresponding to the through hole H2.

Referring to FIGS. 2, 4, and 5, connecting paths (not shown) for the heating medium are formed between the through holes H2 and H6 of the latent heat exchange unit 100B and the third heat exchange unit 100-C of the sensible heat exchange unit 100A.

The heating medium flow paths P1 of the latent heat exchange unit 100B may be connected in parallel between a heating medium inlet connected to the heating medium inlet pipe 101 through which the heating medium is introduced and the connecting paths for the heating medium to reduce a flow resistance of the heating medium.

As shown from the flow directions of the heating medium illustrated with the arrows in FIG. 5, the heating medium passing through the latent heat exchange unit 100B flows through the third heat exchange unit 100-C of the sensible heat exchange unit 100A in two directions, flows through the second heat exchange unit 100-B in the counterclockwise direction, flows through the first heat exchange unit 100-A in the clockwise direction, and is discharged through the heating medium outlet pipe 102.

Referring to FIGS. 4, 5, and 7, in order to secure the flow direction of the heating medium in the sensible heat exchange unit 100A, through holes H3 and H4 adjacent to each other are formed in one side portion of the first plate, and through holes H7 and H8 are formed in one side portion of the second plate at positions corresponding to the through holes H3 and H4. In addition, a blocking portion H3' is formed in the first plate positioned at an uppermost end of the third heat exchange unit 100-C at a position corresponding to the through hole H3, a blocking portion H7' is formed in the second plate positioned at a lowermost end of the second heat exchange unit 100-B at a position corresponding to the through hole H7, a blocking portion H4' is formed in the first plate positioned at the uppermost end of the second heat exchange unit 100-B at a position corresponding to the through hole H4, a blocking portion H8' is formed in the second plate positioned at the lowermost end of the first heat exchange unit 100-A at a position corresponding to the through hole H8, and the blocking portion H3' is formed in the first plate positioned at the uppermost end of the first heat exchange unit 100-A at the position corresponding to the through hole H3.

The through holes H7 and H8 which are adjacent to each other and through which the heating medium is introduced and the through holes H4 and H3 which are adjacent to each other and through which the heating medium is discharged are formed in one side portions of the plurality of heat exchange units 100A, 100B, and 100C, and in the heat exchange units, the through holes H7 and H8 which are adjacent to each other and through which the heating medium is introduced are blocked from the through holes H4 and H3 which are adjacent to each other and through which the heating medium is discharged.

In addition, the through hole through which the heating medium is introduced and the through hole through which the heating medium is discharged, which are formed in any one heat exchange unit of the heat exchange units stacked adjacent to each other, are formed at positions which are opposite to positions at which the through hole through which the heating medium is introduced and the through hole through which the heating medium is discharged are formed in the remaining one heat exchange unit. That is, in the third heat exchange unit 100-C and the second heat exchange unit 100-B which are stacked adjacent to each other, the through hole H4 through which the heating medium is discharged is formed at one side of the third heat exchange unit 100-C, and the through hole H3 through which the heating medium is discharged is formed at the other side of the second heat exchange unit 100-B. In addition, in the second heat exchange unit 100-B and the first heat exchange unit 100-A which are stacked adjacent to each other, the through hole H8 through which the heating medium is introduced is formed at one side of the second heat exchange unit 100-B, the through hole H3 through which the heating medium is discharged is formed at the other side of the second heat exchange unit 100-B, the through hole H7 through which the heating medium is introduced is formed at the other side of the first heat exchange unit 100-A, and the through hole H4 through which the heating medium is discharged is formed at one side of the first heat exchange unit 100-A.

Accordingly, as illustrated in FIG. 5, the heating medium flow paths P1 are formed in series between the plurality of heat exchange units 100-A, 100-B, and 100-C, and the heating medium flow paths P1 are formed in parallel in the heat exchange units 100-A, 100-B, and 100-C. As described above, the heating medium flow paths P1 are formed in parallel in the latent heat exchange unit 100B so that a flow resistance of the heating medium can be decreased, and the heating medium flow paths P1 are formed in series in the sensible heat exchange unit 100A so that the heating medium can smoothly circulate therein, and pressure reduction of the heating medium is minimized and local overheating is prevented so that heat efficiency can be improved.

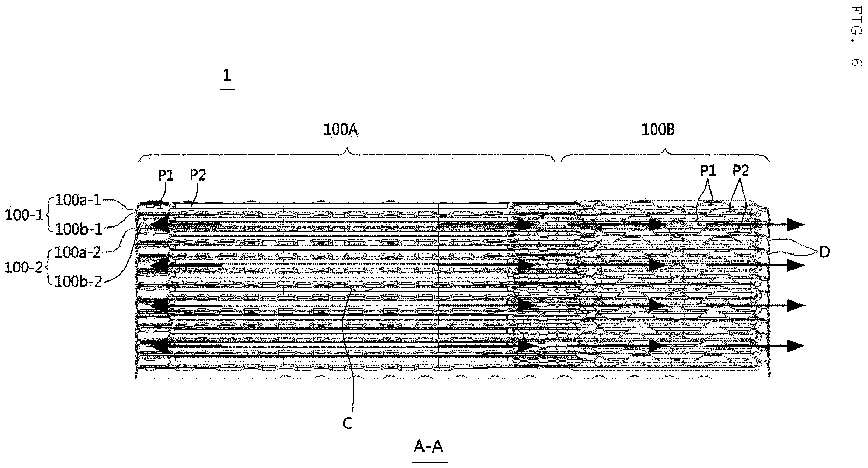

Meanwhile, referring to FIG. 6, the combustion gas generated due to combustion of the burner in the combustion chamber C flows outward in a radial direction of the heat exchange unit 100 and is discharged toward one side (right side in the drawing). In order for the combustion gas to pass through the plurality of combustion gas flow paths P2 and to be constantly discharged, the first flange 140 of the first plate partially overlaps the second flange 180 of the second plate, combustion gas discharge ports D, through which the combustion gas flowing and passing through combustion gas flow paths P2 is discharged, are formed in one regions of the edges of the first plate and the second plate when the first plate and the second plate are stacked. The combustion gas discharged through the combustion gas discharge ports D is discharged through an exhaust hood (not shown).

Referring to FIGS. 7 to 9, the heating medium differential distribution unit is provided at a heating medium outlet side of the sensible heat exchange unit 100A, wherein the heating medium differential distribution unit distributes the heating medium at different flow rates to the parallel heating medium flow paths P1 such that the flow rates of the heating medium passing through the parallel heating medium flow paths P1 are balanced with amounts of absorbed heat transmitted to the plurality of plates.

The heating medium differential distribution unit is a unit configured to distribute the heating medium at the different flow rates such that a flow rate of the heating medium passing through a heating medium flow path P1-1 formed due to the outer plate 100a-1 forming an outer wall of the heat exchange unit 100 among the plurality of plates is relatively lower than flow rates of the heating medium passing through heating medium flow paths P1-2, P1-3, and P1-4 formed due to the remaining plates positioned below the outer plate 100a-1 and inside heat exchange unit 100.

As one embodiment, the heating medium differential distribution unit may be formed to have a structure in which the heating medium outlet pipe 102 provided at the heating medium outlet side of the heat exchange unit 100 extends downward to be positioned at one side of the parallel heating medium flow paths positioned at the heating medium outlet side. In this case, a lower end portion 102a of the heating medium outlet pipe 102 may be spaced apart from a discharge port P1-1' of the heating medium flow path P1-1 formed due to the outer plate 100a-1 and extend to be positioned at one side of the discharge port P1-1' of the heating medium flow path P1-1. Undescribed reference numeral 102b is a fixing unit configured to fix the heating medium outlet pipe 102 to the first plate 100a-1.

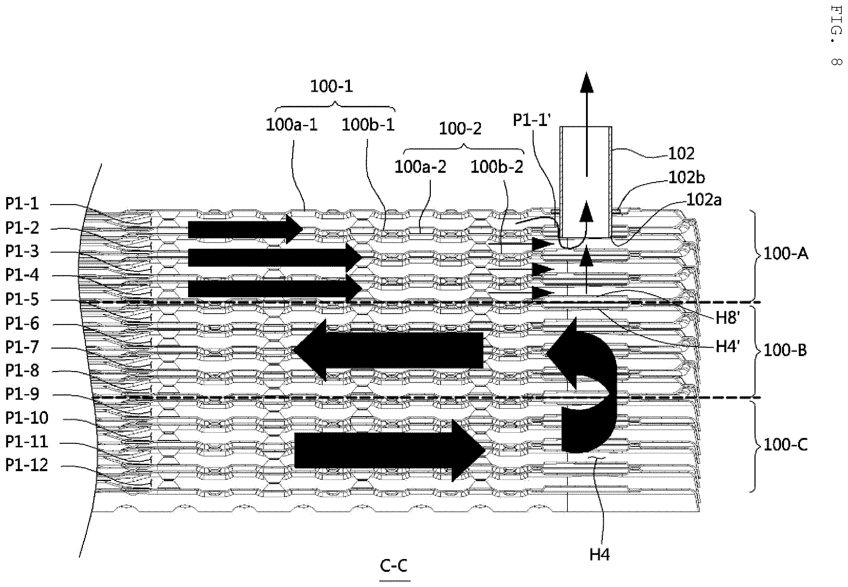

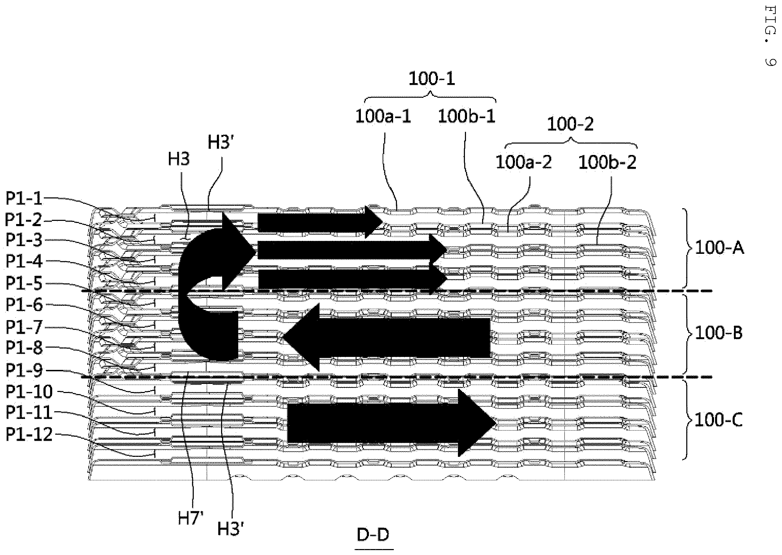

In FIGS. 8 and 9, arrows show directions in which the heating medium flows, lengths of the arrows in the first heat exchange unit 100-A show magnitudes of the flow rates of the heating medium, and thick dotted lines indicate boundaries between the heat exchange units 100-A, 100-B, and 100-C.

Referring to FIGS. 5, 8, and 9, the heating medium passing through heating medium flow paths P1-9, P1-10, P1-11, and P1-12 of the third heat exchange unit 100-C of the sensible heat exchange unit 100A and flowing in two directions passes through heating medium flow paths P1-5, P1-6, P1-7, and P1-8 of the second heat exchange unit 100-B and flows in one direction, the flow direction thereof is changed in a direction opposite to the one direction, and the heating medium passes through the heating medium flow paths P1-1, P1-2, P1-3, and P1-4 of the first heat exchange unit 100-A, flows in a direction opposite to the one direction, and is discharged through the heating medium outlet pipe 102.

As described above, in a case in which the lower end portion 102a of the heating medium outlet pipe (heating medium differential distribution unit) 102 is positioned at one side of the discharge port P1-1' of the outer heating medium flow path P1-1 to be spaced apart from the discharge port P1-1' by a predetermined gap, since the heating medium passing through the outer heating medium flow path P1-1 is blocked by the heating medium outlet pipe (heating medium differential distribution unit) 102 spaced apart from the discharge port P1-1' by the gap, the flow rate of the heating medium passing through the outer heating medium flow path P1-1 among the heating medium flow paths P1-1, P1-2, P1-3, and P1-4 of the first heat exchange unit 100-A may be lower than the flow rate of the heating medium passing through each of the remaining heating medium flow paths P1-2, P1-3, and P1-4. That is, the flow rate of the heating medium passing through each of the remining heating medium flow paths P1-2, P1-3, and P1-4 may be greater than the flow rate of the heating medium passing through the outer heating medium flow path P1-1.

Accordingly, since heat of the combustion gas is transmitted to the heating medium flow path P1-1 formed due to the outer first plate 100a-1 positioned at an outermost side and disposed in contact with external air and the second plate 100b-1 coupled to the outer first plate 100a-1 through only the second plate 100b-1 so that an amount of absorbed heat is relatively small, the heating medium flows at a relatively low flow rate through the heating medium flow path P1-1. Conversely, since the heat of the combustion gas is simultaneously transmitted to the heating medium flow paths P1-2, P1-3, and P1-4 formed due to the first plate and the second plate positioned below the outer first plate 100a-1 and the second plate 100a-2 through all of the first plate and the second plate so that amounts of absorbed heat are relatively large, the heating medium flows at relatively high flow rates through the heating medium flow paths P1-2, P1-3, and P1-4.

According to the above-described configuration, since a heating medium is distributed at different flow rates such that the flow rates of the heating medium passing through the heating medium flow paths formed as the plurality of layers between the plurality of plates are balanced with amounts of absorbed heat transmitted to the plates, boiling of the heating medium and lime precipitation from the heating medium due to local overheating can be suppressed and heat transmittance efficiency can also be improved.

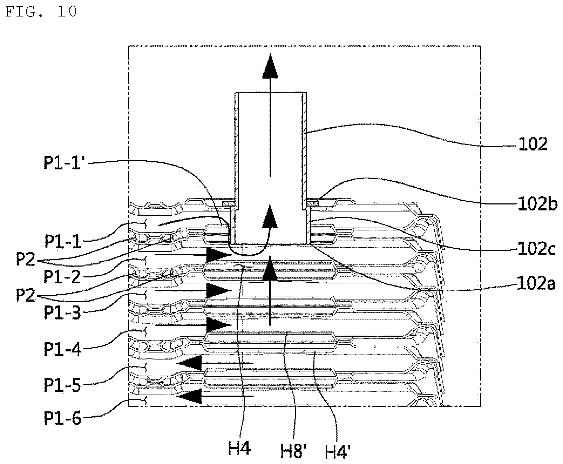

As another embodiment illustrated in FIG. 10, an extension pipe portion 102c, which is positioned at one side of the discharge port P1-1' of the heating medium flow path P1-1 formed due to the outer plate 100a-1, is spaced apart from the discharge port P1-1' of the heating medium flow path P1-1 by a predetermined gap is formed in the heating medium outlet pipe 102.

According to the configuration of the extension pipe portion 102c, even in a case in which a diameter of the heating medium outlet pipe 102 spaced the predetermined gap from the heating medium flow path P1-1 positioned at an outer side is not sufficient to block the one side of the heating medium flow path P1-1, since the extension pipe portion 102c may be spaced the predetermined gap from the heating medium flow path P1-1 positioned at the outer side and may block the one side of the heating medium flow path P1-1, a heating medium may be effectively distributed at different flow rates.

As described above, the present invention is not limited to the above described embodiments, clear modifications of the present invention may be made by those skilled in the art without departing from the technical spirit of the present invention claimed by the appended claims, and the modifications fall within the scope of the present invention.

## Claims

1. A heat exchanger comprising:
a heat exchange unit in which heating medium flow paths and combustion gas flow paths are alternately formed adjacent to each other in a plurality of stacked plates,
wherein a heating medium flows through the heating medium flow paths and combustion gas flows through the combustion gas flow paths; and
a heating medium differential distribution unit formed in the heat exchange unit so that the heating medium is distributed at different flow rates to the heating medium flow paths formed in parallel such that the flow rates of the heating medium passing through the heating medium flow paths, which are formed in parallel, of the heat exchange unit are balanced with amounts of absorbed heat transmitted to the plates.

2. The heat exchanger of claim 1, wherein the heating medium differential distribution unit distributes the heating medium at the different flow rates such that a flow rate of the heating medium passing through the heating medium flow path formed due to an outer plate forming an outer wall of the heat exchange unit among the plurality of plates is less than the flow rate of the heating medium passing through the heating medium flow path formed due to the plate positioned inside the heat exchange unit.

3. The heat exchanger of claim 2, wherein the heating medium differential distribution unit is formed to have a structure in which a heating medium outlet pipe provided at a heating medium outlet side of the heat exchange unit extends toward one side of the heating medium flow paths formed in parallel positioned at the heating medium outlet side.

4. The heat exchanger of claim 3, wherein a lower end portion of the heating medium outlet pipe is spaced a predetermined gap from a discharge port of the heating medium flow path formed due to the outer plate and extends to be positioned at one side of the discharge port of the heating medium flow path.

5. The heat exchanger of claim 4, wherein an extension pipe portion is formed on the heating medium outlet pipe to be spaced the predetermined gap from the discharge port of the heating medium flow path formed due to the outer plate and positioned at the one side of the discharge port of the heating medium flow path.

6. The heat exchanger of claim 1, wherein a sensible heat exchange unit configured to heat the heating medium using sensible heat of the combustion gas generated by combustion of a burner and a latent heat exchange unit configured to heat the heating medium using latent heat of the combustion gas passing through the sensible heat exchange unit are integrally formed in the plurality of stacked plates.

7. The heat exchanger of claim 6, wherein the heating medium differential distribution unit is disposed at a position, which is the same as that of a heating medium outlet pipe provided at a heating medium outlet side of the sensible heat exchange unit, and provided at one side of the sensible heat exchange unit.

8. The heat exchanger of claim 6, wherein the heating medium flow paths of the latent heat exchange unit are formed in parallel.

9. The heat exchanger of claim 6, wherein:
a connecting path of the heating medium is formed between the sensible heat exchange unit and the latent heat exchange unit; and
the heating medium flow paths of the latent heat exchange unit are connected in parallel between a heating medium inlet through which the heating medium is introduced and the connecting path of the heating medium.

10. The heat exchanger of claim 6, wherein:
the heat exchange unit surrounds an outer side of a combustion chamber and is provided to have a stacked structure of a plurality of heat exchange units; and
heating medium flow directions are different from each other in the sensible heat exchange unit formed at one side of the plurality of heat exchange units.

11. The heat exchanger of claim 10, wherein:
the heat exchange unit includes at least two unit heat exchange units; and
the unit heat exchange units are formed such that the heating medium flows in two directions or directions opposite to each other.

12. The heat exchanger of claim 11, wherein:
the heating medium flows in two directions through a first heat exchange unit positioned at a lower portion of the sensible heat exchange unit;
the heating medium flows in one direction through a second heat exchange unit positioned at an intermediate portion of the sensible heat exchange unit; and
the heating medium flows in a direction opposite to the one direction through a third heat exchange unit positioned at an upper portion of the sensible heat exchange unit.

13. The heat exchanger of claim 1, wherein:
the heat exchange unit surrounds an outer side of a combustion chamber and is provided to have a stacked structure of a plurality of heat exchange units;
the heating medium flow paths are connected in series between the plurality of heat exchange units; and
the heating medium flow paths are formed in parallel in each of the heat exchange units.

14. The heat exchanger of claim 13, wherein a through hole at one side, another through hole at the other side, a blocking portion, and another blocking portion are formed in one upper side portion of the heat exchange unit,
wherein the through hole at the one side and the another through hole at the other side provide a connecting path of a heating medium such that the heating medium flows in one direction between the heat exchange units which are stacked adjacent to each other,
the blocking portion guides the heating medium introduced into the heating medium flow path through the through hole at the one side to flow around the combustion chamber in one direction and to flow toward the another through hole at the other side, and
the blocking portion guides the heating medium introduced into the heating medium flow path through the another through hole at the other side to flow around the combustion chamber in a direction opposite to the one direction and to flow toward the through hole at the one side.

15. The heat exchanger of claim 13, wherein:
a through hole through which the heating medium is introduced and another through hole through which the heating medium is discharged are formed to be adjacent and spaced apart from each other in one side portion of each of the plurality of heat exchange units;
the through hole through which the heating medium is introduced is blocked from the another through hole through which the heating medium is discharged, wherein the through hole and the another through hole are positioned adjacent to each other in the heat exchange unit; and
the through hole through which the heating medium is introduced and the another through hole through which the heating medium is discharged, which are formed in any one heat exchange unit among the heat exchange units which are stacked adjacent to each other, are formed at positions which are opposite to each other and at which the through hole through which the heating medium is introduced and the another through hole through which the heating medium is discharged, which are formed in the remaining one heat exchange unit.
